(19) Europäisches Patentamt
European Patent Office
Office européen des brevets

(11) **EP 4 411 870 A1**

(12) **EUROPEAN PATENT APPLICATION**
published in accordance with Art. 153(4) EPC

(43) Date of publication:
**07.08.2024 Bulletin 2024/32**

(21) Application number: **22875714.2**

(22) Date of filing: **02.09.2022**

(51) International Patent Classification (IPC):
**H01M 4/134** (2010.01)        **H01M 4/133** (2010.01)
**H01M 4/36** (2006.01)

(52) Cooperative Patent Classification (CPC):
**H01M 4/133; H01M 4/134; H01M 4/36;** Y02E 60/10

(86) International application number:
**PCT/JP2022/033075**

(87) International publication number:
**WO 2023/053842 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021161037**

(71) Applicant: **Panasonic Intellectual Property
Management Co., Ltd.
Kadoma-shi, Osaka 571-0057 (JP)**

(72) Inventors:
• **TANIGUCHI, Akihiro
  Kadoma-shi, Osaka 571-0057 (JP)**
• **SAKATA, Motohiro
  Kadoma-shi, Osaka 571-0057 (JP)**
• **INOUE, Kaoru
  Kadoma-shi, Osaka 571-0057 (JP)**
• **NAKURA, Kensuke
  Kadoma-shi, Osaka 571-0057 (JP)**

(74) Representative: **Novagraaf International SA
Chemin de l'Echo 3
1213 Onex, Geneva (CH)**

(54) **NEGATIVE ELECTRODE FOR SECONDARY BATTERIES, AND SECONDARY BATTERY**

(57)    A negative electrode for secondary batteries according to one embodiment of the present disclosure comprises a negative electrode collector and a negative electrode mixture layer that is arranged on the negative electrode collector. This negative electrode for secondary batteries is characterized in that: the negative electrode mixture layer comprises a negative electrode active material that contains a carbon material and an Si-based material; the negative electrode mixture layer internally has a plurality of voids; the pore size distribution of the negative electrode mixture layer as determined by a mercury intrusion method has two peak values R1 and R2; and the plurality of voids have an aspect ratio of 2 or more, the aspect ratio being obtained by dividing the length in the major axis direction by the length in the minor axis direction.

Figure 2

EP 4 411 870 A1

**Description**

TECHNICAL FIELD

The present disclosure relates to a negative electrode for a secondary battery and to a secondary battery.

BACKGROUND

Si-based materials are currently attracting attention as a material capable of increasing battery capacity. Si-based materials are capable of electrochemically occluding and releasing lithium ions, and can charge and discharge at very large capacities compared to carbon materials such as graphite.
For example, Patent Literature 1 discloses a negative electrode active material for a lithium ion secondary battery containing a Si-based material represented by SiOx (0 < x < 2) and a carbon material, in which the negative electrode active material for a lithium ion secondary battery has internal voids.

CITATION LIST

PATENT LITERATURE

Patent Literature 1: JP 2013-219059 A
Patent Literature 2: WO 2021/079698 A

SUMMARY

TECHNICAL PROBLEM

By the way, the Si-based material increase the capacity of secondary batteries, but has a problem with swelling of the negative electrode and deterioration of charge-discharge cycle characteristics. Although the technology of Patent Literature 1 can suppress the deterioration of charge-discharge cycle characteristics, further improvement is desired.
Therefore, an object of the present disclosure is to provide a negative electrode for a secondary battery and a secondary battery capable of suppressing swelling of a negative electrode and further suppressing deterioration of charge-discharge cycle characteristics.

SOLUTION TO PROBLEM

A negative electrode for secondary batteries according to one embodiment of the present disclosure comprises a negative electrode collector and a negative electrode mixture layer that is arranged on the negative electrode collector. This negative electrode for secondary batteries is characterized in that: the negative electrode mixture layer comprises a negative electrode active material that contains a carbon material and an Si-based material; the negative electrode mixture layer internally has a plurality of voids; the pore size distribution of the negative electrode mixture layer as determined by a mercury intrusion method has two peak values R1 and R2; and the plurality of voids have an aspect ratio of 2 or more, the aspect ratio being obtained by dividing the length in the major axis direction by the length in the minor axis direction.
A secondary battery according to an aspect of the present disclosure includes the negative electrode for a secondary battery.

ADVANTAGEOUS EFFECTS OF INVENTION

According to the present disclosure, it is possible to provide a negative electrode for a secondary battery and a secondary battery capable of suppressing swelling of a negative electrode and further suppressing deterioration of charge-discharge cycle characteristics.

BRIEF DESCRIPTION OF DRAWINGS

FIG. 1 is a sectional view of a secondary battery of an example of an embodiment.
FIG. 2 is a schematic cross-sectional view of an example of a negative electrode mixture layer.

DESCRIPTION OF EMBODIMENTS

Hereinafter, embodiments of the negative electrode for a secondary battery and the secondary battery according to the present disclosure will be described in detail with reference to the drawings.

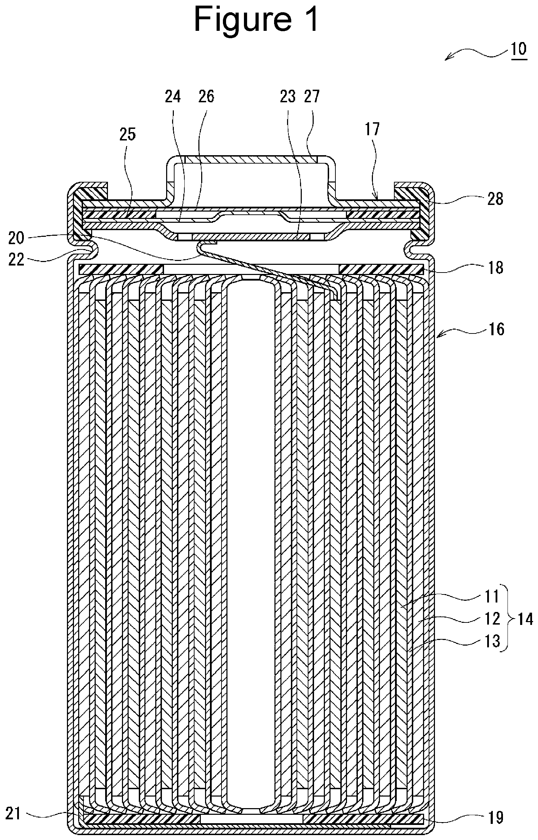

FIG. 1 is a sectional view of a secondary battery of an example of an embodiment. A secondary battery 10 illustrated in FIG. 1 includes a wound electrode assembly 14 in which a positive electrode 11 and a negative electrode 12 are wound with a separator 13 interposed between the positive electrode and the negative electrode, an electrolytic solution, insulating plates 18 and 19 disposed on upper and lower sides of the electrode assembly 14, respectively, and a battery case housing the above-described members and including a case body 16 and a sealing assembly 17. Instead of the wound electrode assembly 14, an electrode assembly having another form, such as a stacked electrode assembly in which positive electrodes and negative electrodes are alternately stacked with separators interposed therebetween, may be applied. In addition, examples of the battery case include a metal case having a cylindrical shape, a square shape, a coin shape, a button shape, or the like, and a resin case formed by laminating resin sheets (so-called laminate type resin case).

The electrolytic solution may be an aqueous electrolytic solution, but is preferably a non-aqueous electrolytic solution containing a non-aqueous solvent and an electrolyte salt dissolved in the non-aqueous solvent. Examples of the non-aqueous solvent include esters, ethers, nitriles, amides, and mixtures of two or more of them. The non-aqueous solvent may contain a halogen-substituted product in which at least a part of hydrogen in a solvent described above is substituted with a halogen atom such as fluorine. Examples of the electrolyte salt include lithium salts such as $LiPF_6$.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, and the separator 13 will be described in detail.

[Positive Electrode]

The positive electrode 11 includes a positive electrode current collector and a positive electrode mixture layer disposed on the positive electrode current collector. The positive electrode current collector may be, for example, a foil of a metal, such as aluminum, that is stable in a potential range of the positive electrode 11, a film in which the metal is disposed on its surface layer. The positive electrode mixture layer includes, for example, a positive electrode active material, a binder, a conductive agent, and the like. The positive electrode 11 can be manufactured by, for example, applying a positive electrode paste including a positive electrode active material, a binding material, a conductive agent, and the like to a surface of a positive electrode current collector, drying the coating film, and then rolling the coating film to form a positive electrode mixture layer on both surfaces of the positive electrode current collector.

Examples of the conductive agent contained in the positive electrode mixture layer include carbon materials such as carbon black, acetylene black, Ketjenblack, graphite, and carbon nanotubes. Examples of the binder included in the positive electrode mixture layer include fluororesins such as polytetrafluoroethylene (PTFE) and polyvinylidene fluoride (PVdF), polyacrylonitrile (PAN), polyimide, acrylic resins, polyolefins, styrene-butadiene rubber (SBR), cellulose derivatives such as carboxymethyl cellulose (CMC) and its salts, and polyethylene oxide (PEO).

Examples of the positive electrode active substance include lithium transition metal composite oxides. Examples of a metal element contained in the lithium transition metal composite oxide include Ni, Co, Mn, Al, B, Mg, Ti, V, Cr, Fe, Cu, Zn, Ga, Sr, Zr, Nb, In, Sn, Ta, or W. Among them, it is preferable to contain at least one of Ni, Co, or Mn. A suitable example of the lithium transition metal composite oxide is a composite oxide represented by a general formula: $LiMO_2$ (where M is Ni and X, X is a metal element other than Ni, and the ratio of Ni is greater than or equal to 50 mol% and less than or equal to 95 mol% based on the total number of moles of the metal element except Li). Examples of X in the above formula include Co, Mn, Al, B, Mg, Ti, V, Cr, Fe, Cu, Zn, Ga, Sr, Zr, Nb, In, Sn, Ta, and W.

[Negative Electrode]

The negative electrode 12 includes a negative electrode current collector and a negative electrode mixture layer disposed on the negative electrode current collector. The negative electrode current collector may be, for example, a foil of a metal, such as copper, that is stable in a potential range of the negative electrode 12, a film in which the metal is disposed on its surface layer. The negative electrode mixture layer includes a negative electrode active material, and may include a binding material, a conductive agent, and the like. The negative electrode active material includes a carbon material and a Si-based material. The negative electrode active material may include a material capable of reversibly occluding and releasing lithium ions in addition to the carbon material and the Si-based material. Examples of the binding material and the conductive agent include those similar to those for the positive electrode 11.

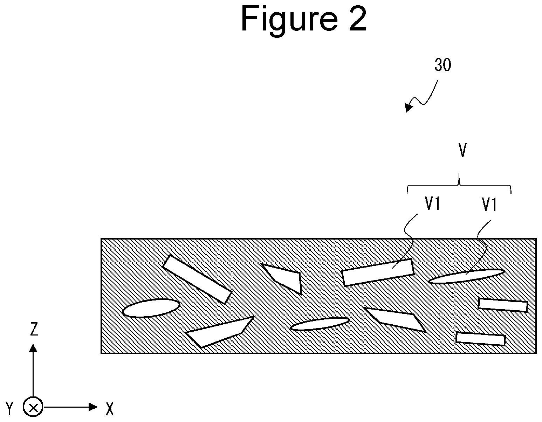

FIG. 2 is a schematic cross-sectional view of an example of a negative electrode mixture layer. Here, the z direction illustrated in FIG. 2 is a thickness direction of the negative electrode mixture layer 30, the x direction is one of in-plane directions in which the negative electrode mixture layer 30 spreads, and the y direction is a direction orthogonal to the x direction.

As illustrated in FIG. 2, the inside of the negative electrode mixture layer 30 has a plurality of voids V The plurality of voids V are formed between particles of a negative electrode active material, a conductive agent, and others of a carbon material or a Si-based material constituting the negative electrode mixture layer 30. The plurality of voids V have anisotropic voids V1. The anisotropic void V1 is a void having an aspect ratio of greater than or equal to 2, which is obtained by dividing the length in the major axis direction by the length in the minor axis direction. In addition, the pore diameter distribution of the negative electrode mixture layer measured by mercury porosimetry has two peak values R1 and R2. As described above, in the negative electrode mixture layer having anisotropic voids having an aspect ratio of greater than or equal to 2 and having two peak values R1 and R2 in the pore diameter distribution, an appropriate space for absorbing expansion of the Si-based material during charging and a sufficient space for allowing the electrolytic solution to permeate are secured, so that swelling of the negative electrode is suppressed even when the battery is charged and discharged, and deterioration of charge-discharge cycle characteristics is also suppressed. The aspect ratio of the anisotropic void V1 is preferably greater than or equal to 2 and less than or equal to 5 from the viewpoint of, for example, further suppressing swelling of the negative electrode or further suppressing deterioration of charge-discharge cycle characteristics.

The proportion of the anisotropic voids V1 in the negative electrode mixture layer 30 (hereinafter referred to as the area ratio of the anisotropic voids V1) is preferably greater than or equal to 3% and less than or equal to 30%, and more preferably greater than or equal to 5% and less than or equal to 25% from the viewpoint of, for example, further suppressing swelling of the negative electrode or further suppressing the deterioration of the charge-discharge cycle characteristics.

The area ratio of the anisotropic void V1 is determined by the following method. First, 10 xz cross sections of the negative electrode mixture layer 30 are photographed with a scanning electron microscope (SEM). The area of the negative electrode mixture layer 30 is determined in each photographed image. Next, the luminance of the portion of the material constituting the negative electrode current collector and the luminance of the portions of the plurality of voids V are extracted from each of the photographed images. The portion of the material constituting the negative electrode current collector is white, and is regarded as the upper luminance limit in each image. The plurality of voids V are black, and are regarded as the lower luminance limit in each image. The range between the upper and lower luminance limits is the luminance range in each image. Next, each image is binarized with the luminance on the upper luminance limit side of the luminance range by 5% from the lower luminance limit of luminance in each image as the threshold (hereinafter, the image after binarization is referred to as a binarized image). In the binarized image, the portion having luminance lower than the threshold is a black region, and the portion having luminance higher than the threshold is a white region. Next, a black region corresponding to the anisotropic void V1 is identified from the black region in the binarized image, and its area is determined. In each image, the ratio of the area of the anisotropic void V1 (B) to the area of the negative electrode mixture layer 30 (A) ((B/A) × 100) is determined, and the average value is calculated. This is defined as the area ratio of the anisotropic void V1 in the present embodiment.

The anisotropic void V1 is identified, for example, as follows. First, the aspect ratio is calculated by dividing the length in the major axis direction of one black region in the binarized image by the length in the minor axis direction. Then, the black region having an aspect ratio of greater than or equal to 2 is identified as the anisotropic void V1. The length in the major axis direction of the black region means the longest major diameter of the black region in the major axis direction, and the length in the minor axis direction of the black region means the longest minor diameter in the direction perpendicular to the longest major diameter of the black region in the major axis direction.

The average value of the aspect ratio of the anisotropic void V1 is, for example, preferably greater than or equal to 2, and more preferably greater than or equal to 2 and less than or equal to 5 from the viewpoint of, for example, further suppressing swelling of the negative electrode or further suppressing deterioration of charge-discharge cycle characteristics. The average length of the anisotropic void V1 in the major axis direction may be, for example, greater than or equal to 2 $\mu$m and less than or equal to 10 $\mu$m. The average length of the anisotropic void V1 in the minor axis direction may be, for example, greater than or equal to 0.4 $\mu$m and less than or equal to 2 $\mu$m. The average value of the aspect ratio, the average length in the major axis direction, and the average length in the minor axis direction of the anisotropic voids V1 are arithmetic average values of the anisotropic voids V1 extracted by extracting all the anisotropic voids V1 from each of the above-described 10 binarized images.

As described later, the anisotropic void V1 is formed by decomposition and vaporization of a pore-forming material added to the negative electrode paste. Therefore, the shape of the anisotropic void V1 depends on the shape of the pore-forming material added to the negative electrode paste. For example, when a pore-forming material including prismatic particles is used, the anisotropic void V1 has a corner portion or a flat portion in the cross-sectional view of the negative electrode mixture layer, and the shape of the anisotropic void V1 is rectangular in the cross-sectional view of the negative electrode mixture layer. However, the shape of the anisotropic void V1 is not particularly limited, and may be, for example, a clearly identifiable shape such as a circular shape, an elliptical shape, a rectangular shape, or another polygonal shape, or may be an indefinite shape that is difficult to be clearly identified (difficult to shape) in a cross-sectional view of the negative electrode mixture layer.

As described above, the pore diameter distribution of the negative electrode mixture layer measured by mercury porosimetry has two peak values R1 and R2. The peak value R1 is preferably greater than or equal to 0.5 $\mu$m and less than or equal to 1.5 $\mu$m, and more preferably greater than or equal to 0.8 $\mu$m and less than or equal to 1.2 $\mu$m from the viewpoint of, for example, further suppressing swelling of the negative electrode or further suppressing deterioration of charge-discharge cycle characteristics. The peak value R2 is preferably greater than or equal to 2 $\mu$m and less than or equal to 10 $\mu$m, and more preferably greater than or equal to 4 $\mu$m and less than or equal to 8 $\mu$m from the viewpoint of, for example, further suppressing swelling of the negative electrode or further suppressing deterioration of charge-discharge cycle characteristics.

In mercury porosimetry, mercury is pressurized to infiltrate mercury into pores (voids) of a solid sample, and the diameter and volume of the pores are calculated from the pressure applied to the mercury and the amount of mercury injected into the pores. When the mercury to which the pressure P is applied can enter the pores having the diameter D, the diameter D of the pores is determined from the pressure P, the contact angle θ of the mercury, and the surface tension σ of the mercury according to the following equation. The pore volume is calculated from the amount of the mercury injected into the pores. In the present disclosure, the pore diameter is the diameter of pores (voids).

$$-4\sigma\cos\theta = PD$$

The pore diameter distribution measured by mercury porosimetry is a graph of Log differential pore volume (cm$^3$/g) plotted against the average pore diameter ($\mu$m) in a section of each measurement point, where the horizontal axis is the pore diameter ($\mu$m) and the vertical axis is the Log differential pore volume (cm$^3$/g). Here, in the present disclosure, the peak value in the pore diameter distribution means a pore diameter at a peak in the pore diameter distribution.

The measurement of the pore diameter distribution by mercury porosimetry is performed on the negative electrode mixture layer before initial charging. For example, by using a measurement sample obtained by punching a negative electrode for a secondary battery into a predetermined shape before initial charging, the pore diameter distribution of the negative electrode mixture layer included in the measurement sample can be measured by mercury porosimetry. The measurement sample only needs to have at least the negative electrode mixture layer on its surface, and may have other configurations such as a negative electrode current collector.

The measurement of the pore diameter distribution by mercury porosimetry can be performed using, for example, an apparatus such as Autopore IV 9500 series manufactured by MicroMeltics. In the measurement, a measurement sample is sealed in a sample container under an inert atmosphere, mercury is injected into the sample container, and pressure is applied to the mercury. Here, the pressure applied to mercury is appropriately adjusted according to the size of the pore diameter that the measurement sample can have, and is not particularly limited, but for example, varying the pressure from 0.5 psi (3.4 kPa) to 60000 psi (413,400 kPa) is preferred in order to measure a wide range of pore diameter.

The Si-based material included in the negative electrode active material is not particularly limited as long as it can reversibly occlude and release ions such as lithium ions, and examples thereof include Si particles, alloy particles containing Si, and Si compound particles. These may be used alone or in combination of two or more thereof.

The Si particles can be obtained by, for example, a gas phase method or pulverization of silicon swarf, but are not limited thereto, and may be produced by any method. Examples of the alloy particles containing Si include alloys containing Si and a metal selected from alkali metals, alkaline earth metals, transition metals, rare earth metals, and combinations thereof. Examples of the Si compound particles include Si compound particles having a silicate phase and Si particles dispersed in the silicate phase, Si compound particles having a silicon oxide phase and Si particles dispersed in the silicon oxide phase, and Si compound particles having a carbon phase and Si particles dispersed in the carbon phase. Among them, Si compound particles having a silicate phase and Si particles dispersed in the silicate phase or Si compound particles having a carbon phase and Si particles dispersed in the carbon phase are preferable from the viewpoint of increasing the capacity of the secondary battery or suppressing a deterioration of charge-discharge cycle characteristics.

The silicate phase preferably includes, for example, at least one element selected from lithium, sodium, potassium, rubidium, cesium, francium, beryllium, magnesium, calcium, strontium, barium, and radium from the viewpoints of high lithium ion conductivity and the like. Among the silicate phases, a silicate phase including lithium (hereinafter, sometimes referred to as lithium silicate phase) is preferable from the viewpoints of high lithium ion conductivity and the like.

The lithium silicate phase is represented by, for example, the formula: $Li_{2z}SiO_{2+z}$ ($0 < z < 2$). From the viewpoints of stability, ease of production, lithium ion conductivity, and the like, z preferably satisfies the relation of $0 < z < 1$, and more preferably $z = 1/2$.

The Si compound particles in which Si particles are dispersed in a silicon oxide phase is represented by, for example, a general formula $SiO_x$ (in which x is preferably in the range of $0 < x < 2$, and more preferably in the range of $0.5 \leq x \leq 1.6$). The Si compound particles in which Si particles are dispersed in a carbon phase are represented by, for example, the general formula $Si_xC_{1y}$ (in which x and y are preferably in the ranges of $0 < x \leq 1$ and $0 < y \leq 1$, and more preferably in the ranges of $0.3 \leq x \leq 0.45$ and $0.7 \leq y \leq 0.55$).

The Si-based material preferably has a particle surface on which a conductive film including a material having high conductivity is formed. Examples of the conductive film include carbon films, metal films, and metal compound films, and a carbon film is preferable from the viewpoints of electrochemical stability and the like. The carbon film can be formed with, for example, a CVD method in which acetylene, methane, or the like is used, a method in which coal pitch, petroleum pitch, a phenol resin, or the like is mixed with a silicon-based active material and the mixture is heat-treated, or the like. The conductive film may also be formed by fixing a conductive filler such as carbon black to the particle surface of the Si-based material using a binder.

The content of the Si-based material is, for example, preferably greater than or equal to 30 mass% with respect to the total mass of the negative electrode active material from the viewpoint of, for example, increasing the capacity of the secondary battery. In addition, from the viewpoint of achieving a high capacity of the secondary battery and further suppressing swelling of the negative electrode, the content of the Si-based material is preferably greater than or equal to 30 mass% and less than or equal to 60 mass%, and more preferably greater than or equal to 35 mass% and less than or equal to 55 mass% of the total mass of the negative electrode active material.

The average particle diameter of the Si-based material is preferably greater than or equal to 4 $\mu$m, more preferably greater than or equal to 4 $\mu$m and less than or equal to 12 $\mu$m, and still more preferably greater than or equal to 6 $\mu$m and less than or equal to 10 $\mu$m from the viewpoint of, for example, further suppressing deterioration of charge-discharge cycle characteristics.

Examples of the carbon material included in the negative electrode active material include conventionally known carbon materials used as negative electrode active materials for secondary batteries, but graphite such as natural graphite such as scale-like graphite, massive graphite, and earth graphite, massive artificial graphite (MAG), and artificial graphite such as mesocarbon microbeads (MCMB) are preferable from the viewpoint of more suppressing deterioration of charge-discharge cycle characteristics.

The average particle diameter of the carbon material is, for example, preferably greater than or equal to 10 $\mu$m and less than or equal to 25 $\mu$m, and more preferably greater than or equal to 12 $\mu$m and less than or equal to 20 $\mu$m from the viewpoint of further suppressing swelling of the negative electrode.

The average particle diameter of each material is a volume average particle diameter D50, which is 50% of the volume integrated value in the particle diameter distribution obtained by laser diffraction scattering.

The content of the carbon material is, for example, preferably greater than or equal to 40 mass% and less than or equal to 70 mass%, more preferably greater than or equal to 45 mass% and less than or equal to 65 mass% of the total amount of the negative electrode active material.

An example of a method of manufacturing the negative electrode 12 will be described. The negative electrode 12 includes: a first step of applying a negative electrode paste including a negative electrode active material containing a carbon material and a Si-based material, a pore-forming material, and a binding material or the like added as necessary to a negative electrode current collector to prepare a coating film, and then rolling the coating film; and a second step of heating the coating film after the first step to decompose and vaporize the pore-forming material to form a negative electrode mixture layer. The average particle diameter and content of the Si-based material and the carbon material are as described above, and will not be described.

By heat-treating the coating film to decompose and vaporize (for example, sublimate) the pore-forming material, and releasing the pore-forming material from within the coating film, not only small voids are formed but also relatively large voids are formed between the particles in the negative electrode mixture layer. As described above, the pore distribution of the negative electrode mixture layer has two peak values R1 and R2 by heat-treating the negative electrode paste to which the pore-forming material is added. In addition, by using a pore-forming material having a high aspect ratio, which is obtained by dividing the length in the major axis direction by the length in the minor axis direction, anisotropic voids having an aspect ratio of greater than or equal to 2, which is obtained by dividing the length in the major axis direction by the length in the minor axis direction, can be formed in the negative electrode mixture layer. Note that when a negative electrode paste containing no pore-forming material is used, only small voids are formed between particles in the obtained negative electrode mixture layer. That is, the pore distribution of the negative electrode mixture layer has only one peak value.

The pore-forming material may be any known material. Examples of the pore-forming material include metal oxalates, camphor, and naphthalene. Other examples of the pore-forming material include dicarboxylic acids such as fumaric acid, malonic acid, and malic acid. The aspect ratio of the pore-forming material is, for example, preferably greater than or equal to 2, and more preferably greater than or equal to 2 and less than or equal to 5. The use of a pore-forming material having an aspect ratio of greater than or equal to 2 facilitates the formation of voids having an aspect ratio of greater than or equal to 2 in the negative electrode mixture layer. The average particle diameter of the pore-forming material is preferably, for example, greater than or equal to 2 $\mu$m and less than or equal to 10 $\mu$m. By setting the average particle diameter of the pore-forming material within the above range, it becomes easier to form a negative electrode mixture layer having a pore diameter distribution including two peak values R1 and R2, and particularly, it becomes easier to control the peak value R2 to a range greater than or equal to 2 $\mu$m and less than or equal to 10 $\mu$m. The peak values R2 and R1 in the pore diameter distribution of the negative electrode mixture layer can be controlled by adjusting, for example, the average particle diameter of each material used for the negative electrode active material as well as the average particle diameter of the pore-forming material, the viscosity of the negative electrode paste by adding a solvent or the like, the heat treatment time and temperature, and the linear pressure during rolling of the coating film.

Examples of the mixing of the raw materials such as the negative electrode active material, the pore-forming material, and the binding material in obtaining the negative electrode paste include cutter mills, pin mills, bead mills, fine particle composing machines (devices in which shear force is generated between a specially shaped rotor rotating at a high speed inside a tank and a collision plate), granulators, and kneading machines such as twin-screw extruders and planetary mixers.

The negative electrode paste is applied using, for example, a slit die coater, a reverse roll coater, a lip coater, a blade coater, a knife coater, a gravure coater, or a dip coater.

The rolling of the coating film may be performed several times at a predetermined linear pressure, for example, with a roll press machine until the coating film has a predetermined thickness.

In the first step, when the negative electrode paste is applied to the negative electrode current collector to obtain a coating film, the coating film is preferably heat-dried. The temperature of the heat-drying at this time is preferably a temperature at which the pore-forming material is not decomposed or vaporized, but a part of the pore-forming material may be decomposed or vaporized by the heat-drying. The heat treatment temperature in the second step is not particularly limited as long as it is a temperature at which the pore-forming material is decomposed and vaporized. The heat treatment time in the second step should be sufficient to decompose and vaporize the pore-forming material in the coating film, for example, greater than or equal to 5 hours.

[Separator]

As the separator 13, for example, a porous sheet having an ion permeation property and an insulation property is used. Specific examples of the porous sheet include fine porous thin films, woven fabrics, and nonwoven fabrics. As a material of the separator 13, polyolefin such as polyethylene and polypropylene, cellulose, and the like are suitable. The separator 13 may have a single-layered structure or a multilayered structure. On the surface of the separator, a heat-resistant layer or the like may be formed.

EXAMPLES

Hereinafter, the present disclosure will be further described with reference to Examples, but the present disclosure is not limited to these Examples.

<Example 1>

[Manufacturing of Negative Electrode]

Graphite particles having an average particle diameter of 17 $\mu$m and a Si-based material having an average particle diameter of 8 $\mu$m and Si particles dispersed in a carbon phase were mixed at a mass ratio of 50 : 50. This mixture was used as a negative electrode active material. Then, the negative electrode active material, carboxymethyl cellulose (CMC), styrene-butadiene copolymer rubber (SBR), multi-walled carbon nanotubes, and fumaric acid (average particle diameter: 6 $\mu$m, aspect ratio: 3.5) were mixed at a mass ratio of 100 : 1 : 1 : 1 : 12.5, and the mixture was mixed with given water to prepare a negative electrode paste. The negative electrode paste was applied to both surfaces of a negative electrode current collector made of a copper foil, and the coating film was dried and then rolled with a roller. Thereafter, the coating film was heat-treated at 200°C for 5 hours to produce a negative electrode in which a negative electrode mixture layer was formed on both surfaces of a negative electrode current collector.

In the obtained negative electrode, the pore diameter distribution of the negative electrode mixture layer was measured by mercury porosimetry and showed two peak values R1 and R2, where the peak value R1 was 1 $\mu$m and the peak value R2 was 6 $\mu$m. As a result of observing the cross section of the negative electrode mixture layer with a SEM, the average value of the aspect ratios of the anisotropic voids V1 existing inside the negative electrode mixture layer was 3.5. The average value of the aspect ratios is calculated as described above.

[Manufacturing of Positive Electrode]

A lithium-transition metal composite oxide represented by $LiCo_{1/3}Mn_{1/3}Ni_{1/3}O_2$, acetylene black, and polyvinylidene fluoride were mixed at a mass ratio of 98 : 1 : 1, and then N-methyl-2-pyrrolidone (NMP) was added to prepare a positive electrode paste. The negative electrode paste was applied to both surfaces of an aluminum foil, the coating film was dried and then rolled with a roller to produce a positive electrode in which a positive electrode mixture layer was formed on both surfaces of a positive electrode current collector.

[Preparation of Non-aqueous electrolytic solution]

In a mixed solvent obtained by mixing ethylene carbonate (EC) and ethyl methyl carbonate (EMC) at a mass ratio of 1 : 3, $LiPF_6$ was dissolved at a concentration of 1 mol/L to prepare a non-aqueous electrolytic solution.

[Production of Test Cell]

The positive electrode and the negative electrode were stacked so as to face each other with a polyolefin separator interposed therebetween, and the resulting product was wound to produce an electrode assembly. Next, the electrode assembly was housed in a bottomed cylindrical battery case body, the non-aqueous electrolytic solution was injected, and then the opening of the battery case body was sealed with a gasket and a sealing assembly to produce a test cell.

<Example 2>

A negative electrode was produced in the same manner as in Example 1 except that fumaric acid having an average particle diameter of 6 $\mu$m and an aspect ratio of 2 was used, and a test cell was produced in the same manner as in Example 1. In the negative electrode of Example 2, the pore diameter distribution of the negative electrode mixture layer was measured by mercury porosimetry and showed two peak values R1 and R2, where the peak value R1 was 1 $\mu$m and the peak value R2 was 6 $\mu$m. As a result of observing the cross section of the negative electrode mixture layer with a SEM, the average value of the aspect ratios of the anisotropic voids V1 existing inside the negative electrode mixture layer was 2.

<Example 3>

A negative electrode was produced in the same manner as in Example 1 except that fumaric acid having an average particle diameter of 6 μm and an aspect ratio of 5 was used, and a test cell was produced in the same manner as in Example 1. In the negative electrode of Example 3, the pore diameter distribution of the negative electrode mixture layer was measured by mercury porosimetry and showed two peak values R1 and R2, where the peak value R1 was 1 μm and the peak value R2 was 6 μm. As a result of observing the cross section of the negative electrode mixture layer with a SEM, the average value of the aspect ratios of the anisotropic voids V1 existing inside the negative electrode mixture layer was 5.

<Example 4>

A negative electrode was produced in the same manner as in Example 1 except that fumaric acid having an average particle diameter of 6 μm and an aspect ratio of 8 was used, and a test cell was produced in the same manner as in Example 1. In the negative electrode of Example 4, the pore diameter distribution of the negative electrode mixture layer was measured by mercury porosimetry and showed two peak values R1 and R2, where the peak value R1 was 1 μm and the peak value R2 was 6 μm. As a result of observing the cross section of the negative electrode mixture layer with a SEM, the average value of the aspect ratios of the anisotropic voids V1 existing inside the negative electrode mixture layer was 8.

<Example 5>

A negative electrode was produced in the same manner as in Example 1 except that graphite particles and a Si-based material, in which Si particles were dispersed in a carbon phase, were mixed at a mass ratio of 70 : 30, and a test cell was produced in the same manner as in Example 1. In the negative electrode of Example 5, the pore diameter distribution of the negative electrode mixture layer was measured by mercury porosimetry and showed two peak values R1 and R2, where the peak value R1 was 1 μm and the peak value R2 was 6 μm. As a result of observing the cross section of the negative electrode mixture layer with a SEM, the average value of the aspect ratios of the anisotropic voids V1 existing inside the negative electrode mixture layer was 3.5.

<Example 6>

A negative electrode was produced in the same manner as in Example 1 except that graphite particles and a Si-based material, in which Si particles were dispersed in a carbon phase, were mixed at a mass ratio of 80 : 20, and a test cell was produced in the same manner as in Example 1. In the negative electrode of Example 6, the pore diameter distribution of the negative electrode mixture layer was measured by mercury porosimetry and showed two peak values R1 and R2, where the peak value R1 was 1 μm and the peak value R2 was 6 μm. As a result of observing the cross section of the negative electrode mixture layer with a SEM, the average value of the aspect ratios of the anisotropic voids V1 existing inside the negative electrode mixture layer was 3.5.

<Comparative Example>

A negative electrode was produced in the same manner as in Example 1 except that fumaric acid having an average particle diameter of 6 μm and an aspect ratio of 1 was used, and a test cell was produced in the same manner as in Example 1. In the negative electrode of Comparative Example, the pore diameter distribution of the negative electrode mixture layer was measured by mercury porosimetry and showed two peak values R1 and R2, where the peak value R1 was 1 μm and the peak value R2 was 6 μm. As a result of observing the cross section of the negative electrode mixture layer with a SEM, the average value of the aspect ratios of the voids existing inside the negative electrode mixture layer was 1. In addition, no anisotropic void V1 having an aspect ratio of greater than or equal to 2 was observed inside the negative electrode mixture layer.

[Evaluation of Battery Capacity]

The test cell in each of Examples and Comparative Example was charged at a constant current of 0.5 C under a temperature environment of 25°C until the battery voltage reached 4.2 V, and then charged at a constant voltage of 4.2 V until the current value reached 0.05 C. Thereafter, the battery was discharged at a constant current of 0.2 C until the battery voltage reached 2.5 V The discharge capacity at this time was used as the battery capacity, and the results are summarized in Table 1.

[Charge-Discharge Cycle Test]

The test cell in each of Examples and Comparative Example was charged at a constant current of 0.5 C under a temperature environment of 25°C until the battery voltage reached 4.2 V, and then charged at a constant voltage of 4.2 V until the current value reached 0.05 C. Thereafter, the battery was discharged at a constant current of 0.5 C until the battery voltage reached 2.5 V Fifty cycles of this charge-discharge cycle were performed, and the capacity retention rate over the charge-discharge cycle was determined by the following equation, and the results are summarized in Table 1.

Capacity retention rate (%) = (discharge capacity at 50th cycle/discharge capacity at 1st cycle) × 100

[Evaluation of Negative Electrode Swelling Rate]

The test cell in each of Examples and Comparative Example was charged at a constant current of 1/3 C under a temperature environment of 25°C until the battery voltage reached 4.2 V, and then charged at a constant voltage of 4.2 V until the current value reached 0.05 C. The test cell after the charge was disassembled, the negative electrode was taken out, and the thickness of the negative electrode after charging was measured with a micro gauge. Then, the negative electrode swelling rate was calculated by the following equation, and the results are summarized in Table 1.

Negative electrode swelling rate (%) = (thickness of negative electrode after charge/thickness of negative electrode at production of negative electrode) × 100

[Table 1]

| | R1 | R2 | Aspect ratio of void | Content of Si-based material | Negative electrode swelling rate | Battery capacity | Capacity retention rate |
|---|---|---|---|---|---|---|---|
| Unit | μm | μm | Major axis/ minor axis | wt% | % | mAh | % |
| Example 1 | 1 | 6 | 3.5 | 50 | 125 | 550 | >95 |
| Example 2 | 1 | 6 | 2 | 50 | 127 | 550 | >95 |
| Example 3 | 1 | 6 | 5 | 50 | 127 | 550 | >95 |
| Example 4 | 1 | 6 | 8 | 50 | 128 | 550 | >95 |
| Example 5 | 1 | 6 | 3.5 | 30 | 122 | 502 | >95 |
| Example 6 | 1 | 6 | 3.5 | 20 | 119 | 471 | >95 |
| Comparative Example 1 | 1 | 6 | 1 | 50 | 135 | 550 | 92 |

As shown in Table 1, in all of Examples 1 to 6, the battery capacity was greater than or equal to 450 mAh, the capacity retention rate after 50 cycles was greater than or equal to 95%, and the swelling rate of the negative electrode was less than 130%. On the other hand, in Comparative Example, the battery capacity was 550 mAh, but the capacity retention rate was less than 95% after 50 cycles, and the swelling rate of the negative electrode was greater than or equal to 130%. From these results, in a negative electrode mixture layer including a negative electrode active material containing a carbon material and a Si-based material, when its pore diameter distribution measured by mercury porosimetry has two peak values R1 and R2, and a plurality of voids formed inside the negative electrode mixture layer have anisotropic voids having an aspect ratio of greater than or equal to 2, which is obtained by dividing the length in the major axis direction by the length in the minor axis direction, it is possible to suppress swelling of the negative electrode and to suppress deterioration of charge-discharge cycle characteristics.

REFERENCE SIGNS LIST

| | |
|---|---|
| 10 | SECONDARY BATTERY |
| 11 | POSITIVE ELECTRODE |
| 12 | NEGATIVE ELECTRODE |
| 13 | SEPARATOR |
| 14 | ELECTRODE ASSEMBLY |
| 16 | CASE BODY |
| 17 | SEALING ASSEMBLY |
| 18, 19 | INSULATING PLATE |
| 20 | POSITIVE ELECTRODE LEAD |
| 21 | NEGATIVE ELECTRODE LEAD |
| 22 | PROJECTING PORTION |
| 23 | FILTER |
| 24 | LOWER VENT MEMBER |
| 25 | INSULATING MEMBER |
| 26 | UPPER VENT MEMBER |
| 27 | CAP |
| 28 | GASKET |
| 30 | NEGATIVE ELECTRODE MIXTURE LAYER |

**Claims**

1. A negative electrode for a secondary battery comprising a negative electrode current collector and a negative electrode mixture layer that is arranged on the negative electrode collector,

   wherein the negative electrode mixture layer comprises a negative electrode active material that contains a carbon material and an Si-based material,
   the negative electrode mixture layer internally has a plurality of voids,
   the negative electrode mixture layer has two peak values R1 and R2 in the pore diameter distribution measured by mercury porosimetry, and
   the plurality of voids have anisotropic voids having an aspect ratio of greater than or equal to 2, which is obtained by dividing the length in the major axis direction by the length in the minor axis direction.

2. The negative electrode for a secondary battery according to claim 1, wherein the plurality of voids has anisotropic voids having an aspect ratio of greater than or equal to 2 and less than or equal to 5, which is obtained by dividing the length in the major axis direction by the length in the minor axis direction.

3. The negative electrode for a secondary battery according to claim 1 or 2, wherein the Si-based material has a content of greater than or equal to 30 mass% of the total mass of the negative electrode active material.

4. The negative electrode for a secondary battery according to claim 3, wherein the Si-based material has a content of greater than or equal to 30 mass% and less than or equal to 60 mass% of the total mass of the negative electrode active material.

5. The negative electrode for a secondary battery according to any one of claims 1 to 4, wherein the anisotropic void has a corner portion in a cross-sectional view of the negative electrode mixture layer.

6. The negative electrode for a secondary battery according to any one of claims 1 to 5, wherein the anisotropic void has a flat portion in a cross-sectional view of the negative electrode mixture layer.

7. The negative electrode for a secondary battery according to any one of claims 1 to 6, wherein the anisotropic void has a rectangular shape in a cross-sectional view of the negative electrode mixture layer.

8. The negative electrode for a secondary battery according to any one of claims 1 to 7, wherein the peak value R1 is greater than or equal to 0.5 $\mu$m and less than or equal to 1.5 $\mu$m, and the peak value R2 is greater than or equal to 2 $\mu$m and less than or equal to 10 $\mu$m.

9. A secondary battery comprising the negative electrode for a secondary battery according to any one of claims 1 to 8.

# Figure 1

# Figure 2

## INTERNATIONAL SEARCH REPORT

| International application No. |
|---|
| **PCT/JP2022/033075** |

### A. CLASSIFICATION OF SUBJECT MATTER

*H01M 4/134*(2010.01)i; *H01M 4/133*(2010.01)i; *H01M 4/36*(2006.01)i
FI:   H01M4/134; H01M4/133; H01M4/36 E

According to International Patent Classification (IPC) or to both national classification and IPC

### B. FIELDS SEARCHED

Minimum documentation searched (classification system followed by classification symbols)

H01M4/134; H01M4/133; H01M4/36

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2008-186732 A (NIPPON CARBON CO., LTD.) 14 August 2008 (2008-08-14) example 4, fig. 13, 14 | 1-2, 5-7, 9 |
| Y | WO 2021/079698 A1 (TDK CORP.) 29 April 2021 (2021-04-29) claim 1, paragraphs [0006], [0067], [0068], example 4 | 1-9 |
| Y | WO 2020/175361 A1 (SANYO ELECTRIC CO., LTD.) 03 September 2020 (2020-09-03) paragraphs [0031], [0049] | 1-9 |
| A | JP 2013-219059 A (SUMITOMO BAKELITE CO., LTD.) 24 October 2013 (2013-10-24) claims, paragraph [0020] | 1-9 |
| A | WO 2018/155155 A1 (NGK INSULATORS, LTD.) 30 August 2018 (2018-08-30) claims, paragraphs [0021], [0029] | 1-9 |
| A | JP 2013-110105 A (TOYOTA INDUSTRIES CORP.) 06 June 2013 (2013-06-06) paragraph [0014] | 1-9 |
| A | JP 2016-58343 A (TOPPAN PRINTING CO., LTD.) 21 April 2016 (2016-04-21) claims | 1-9 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 October 2022** | **18 October 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2022/033075**

| Patent document cited in search report | | | Publication date (day/month/year) | Patent family member(s) | | | Publication date (day/month/year) |
|---|---|---|---|---|---|---|---|
| JP | 2008-186732 | A | 14 August 2008 | (Family: none) | | | |
| WO | 2021/079698 | A1 | 29 April 2021 | CN | 114556618 | A | |
| WO | 2020/175361 | A1 | 03 September 2020 | US | 2022/131131 | A1 | |
| | | | | paragraphs [0041], [0066] | | | |
| | | | | EP | 3933972 | A1 | |
| | | | | CN | 113474914 | A | |
| JP | 2013-219059 | A | 24 October 2013 | (Family: none) | | | |
| WO | 2018/155155 | A1 | 30 August 2018 | US | 2019/0363357 | A1 | |
| | | | | claims, paragraphs [0025], [0033] | | | |
| | | | | CN | 110313086 | A | |
| JP | 2013-110105 | A | 06 June 2013 | (Family: none) | | | |
| JP | 2016-58343 | A | 21 April 2016 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013219059 A

- WO 2021079698 A